# EUROPEAN PATENT APPLICATION

(11) **EP 2 112 002 A2**
(43) Date of publication of application: **28.10.2009**
(21) Application number: 09004373.8
(22) Date of filing: 26.03.2009
(51) Int. Cl.: B60B 27/00

(54) **Wheel bearing assembly and manufacturing method thereof**

(30) Priority: 28.03.2008 JP 2008086746; 28.03.2008 JP 2008087085; 08.04.2008 JP 2008100057
(71) Applicant: JTEKT Corporation, Osaka-shi Osaka 542-8502 (JP)
(72) Inventor: Kamikawa, Tsuyoshi, Osaka-shi Osaka 542-8502 (JP); Inoue, Masahiro, Osaka-shi Osaka 542-8502 (JP)
(74) Representative: Schmitz, Hans-Werner

(57) **Abstract**

Female splines (90), which are formed extending in the axial direction on an inner peripheral surface of a central hole (14) provided in a hub spindle (13) of a wheel hub (10) to which a wheel is mounted, are spline engaged to male splines (80), which are formed extending in the axial direction on an outer peripheral surface of a central shaft (62) that protrudes from an end surface of a constant velocity joint outer ring (60). A seal layer (101) made of an anaerobic sealant (101a) that seals a gap at a meshing area where the male splines (80) and the female splines (90) mesh together is provided at that meshing area.

## Description

### BACKGROUND OF THE INVENTION

### 1. Field of the Invention

The invention relates to a wheel bearing assembly in which a central hole of the hub spindle of a wheel hub to which a wheel may be mounted is spline engaged with a central shaft that protrudes from an end surface of an outer ring of a constant velocity (CV) joint, as well as a manufacturing method of that wheel bearing assembly.

### 2. Description of the Related Art

Japanese Patent Application Publication No. 2001-301407 and Japanese Patent Application Publication No. 09-96317, for example, describes a wheel bearing assembly. In the described wheel bearing assembly, female splines extend in the axial direction on an inner peripheral surface of the central hole formed in a hub spindle of a wheel hub, and male splines which also extend in the axial direction and engage with the female splines are formed on an outer peripheral surface of a central shaft that protrudes from an outer end surface of an outer ring of a CV joint. The female splines on the inner peripheral surface of the central hole of the wheel hub are placed into mesh with the male splines on the central shaft of the outer ring of the CV joint such that the male and female splines are coupled together in a manner that enables torque to be transferred between them.
Then a cylindrical protrusion at a tip end of the central shaft is calked radially outward along the outer end surface of the wheel hub so as to form a calked portion. As a result, the outer ring of the CV joint is integrally coupled to the wheel hub.

Incidentally, in the wheel bearing assembly described above, a fastener portion (e.g., the calked portion or a locknut portion) that couples the hub spindle and the central shaft of the CV joint together is positioned to the outside in the vehicle width direction and thus is vulnerable to getting wet and the like. If water accidentally gets into a tiny gap in the fastener portion, that water will likely be drawn into a gap in the portion
where the female splines on the wheel hub mesh with the male splines on the central shaft of the outer ring of the CV joint (hereinafter this portion may also be referred to as the "meshing area") from capillarity or the like. If water gets into the portion where the male and female splines mesh together (i.e., the meshing area), that portion may rust or water may get the inside the roller bearing.

Also, in this wheel bearing assembly, one set of splines, either the female splines on the hub spindle or the male splines on the central shaft of the outer ring of the CV joint, may be helically formed at a lead angle in the circumferential direction. In this case, torque is transferred with opposing faces of the spline teeth of the male and female splines contacting one another with no clearance in between at both the outer and inner end portions of the male and female splines. Furthermore, at the middle portion in the axial direction of the male and female splines, there is a gap (clearance) between opposing faces of the spline teeth of the male and female splines so torque is not transferred at this portion.

Also, in the wheel bearing assembly described above, in order to align the central hole of the hub spindle and the central shaft of the CV joint outer ring on the same central axis, the spline major diameters must be made so that the faces of the spline teeth match up nicely. Therefore, the top lands of the spline teeth that make up the male splines of the central shaft and the bottom lands of the spline teeth that make up the female splines of the central hole of the hub spindle are precisely ground along their entire lengths in the axial direction in the spline engaging region such that they spline engage while contacting each other. This kind of machining is labor intensive and takes time, which increases costs.

### SUMMARY OF THE INVENTION

The invention provides a wheel bearing assembly that inhibits water from entering a gap in a meshing area where female splines on the inner peripheral surface of a central hole of a wheel hub mesh with male splines on the central shaft of an outer ring of a constant velocity (CV) joint, as well as a method of manufacturing the wheel bearing assembly.

The invention also provides a wheel bearing assembly in which a central hole formed in a hub spindle of a wheel hub may be efficiently splined to the central shaft of the outer ring of a CV joint, as well as a method of manufacturing the wheel bearing assembly.

In addition, the invention further provides a wheel bearing assembly in which only a portion in a spline engaging region of a central hole of a hub spindle and a central shaft of a CV joint outer ring are aligned on the same central axis, and which can reduce machining costs, as well as a method of manufacturing the wheel bearing assembly.

Therefore, a first aspect of the invention relates to a wheel bearing assembly that includes i) a wheel hub having a hub spindle, a central hole formed in a central shaft of the hub spindle, and female splines formed extending in the axial direction on the inner peripheral surface of the central hole, and ii) a constant velocity joint outer ring having a central shaft and male splines formed extending in the axial direction on the outer peripheral surface of the central shaft. The wheel hub and the constant velocity joint outer ring are splined together by fitting the male splines together with the female splines, and a seal layer made of an anaerobic sealant, that is provided at an area where the male splines mesh with the female splines to seal a gap at the meshing area.

The seal layer made of an anaerobic sealant prevents water from entering the gap at the meshing area where the male splines on the central shaft of the constant velocity joint outer ring mesh together with the female splines in the central hole formed in the hub spindle of the wheel hub.

The wheel bearing assembly described above may also include a first annular protrusion formed at a tip of the central shaft of the constant velocity joint outer ring, and an annular elastic seal body. The annular elastic seal body may be retained between the hub spindle and a calked portion formed by calking the first annular protrusion radially outward with respect to the central shaft. The wheel bearing assembly described above may also include a second annular protrusion that stands upright on an outer end surface of the wheel hub, and a watertight cover. The watertight cover may be fitted into the second annular protrusion.

These structures further inhibit water from entering the spline meshing area by providing a double seal formed by the seal layer of the anaerobic sealant together with the annular elastic seal body or watertight cover. In addition, a triple seal may also be applied to the wheel bearing apparatus having a seal layer of an anaerobic sealant.

Also, in the wheel bearing assembly described above, one set of splines from among the male splines and the female splines, may be formed at a lead angle in the circumferential direction, and a non-meshing area, where spline teeth are absent, may be formed at a middle portion in the axial direction of at least one set of splines, from among the male splines and the female splines.

The structure enables the spline teeth of the male and female splines to be efficiently spline engaged, and reduces the weight, by providing a non-meshing area
where no spline teeth are formed at the middle portion in the axial direction of the male splines and/or the female splines.

Also, in the wheel bearing assembly described above, a large diameter hole having a hole diameter that is larger than a root diameter of female spline teeth may be formed at the middle portion in the axial direction of the inner peripheral surface of the central hole provided in the hub spindle, and the non-meshing area may be formed by the large diameter hole.

This structure reduces the weight of the hub spindle (i.e., the wheel hub) by providing the large diameter hole as a non-meshing area by forming at the middle portion in the axial direction of the inner peripheral surface of the central hole of the hub spindle.

Furthermore, in the wheel bearing assembly described above, the female spline teeth may be formed after the large diameter hole is formed at the middle portion in the axial direction of the inner peripheral surface of the central hole formed in the hub spindle.

This structure enables the machining cost of the female splines to be reduced by forming the large diameter hole at a predetermined position in the central hole of the hub spindle before forming the female splines on the inner peripheral surface of the central hole of the hub spindle.

In the wheel bearing assembly described above, a small diameter shaft portion, which has an outside diameter that is smaller than a root diameter of male spline teeth, may be formed at the middle portion in the axial direction of the central shaft of the constant velocity joint outer ring, and the non-meshing area may be formed by this small diameter shaft portion.

This structure reduces the weight of the central shaft of the constant velocity joint outer ring by providing the small diameter shaft portion as a non-meshing area by forming at the middle portion in the axial direction of the central shaft of the constant velocity joint outer ring.

Also, in the wheel bearing assembly described above, the male spline teeth may be formed after the small diameter shaft portion is formed at the middle portion in the axial direction of the outer peripheral surface of the central shaft of the constant velocity joint outer ring.

This structure enables the machining cost of the male splines to be reduced by forming the small diameter shaft portion at a predetermined position on the central shaft before forming the male splines that extend in the axial direction on the outer peripheral surface of the central shaft.

In the wheel bearing assembly described above, a smooth surface portion having no spline teeth may be formed on a part, in the axial direction in a spline engaging region where the male splines mesh with the female splines, of the peripheral surface of either the inner peripheral surface of the central hole or the outer peripheral surface of the central shaft. Also, the smooth surface portion and top lands of the spline teeth formed on the other peripheral surface may be fitted together in a press-fit state.

This structure enables the hub spindle and the central shaft of the constant velocity joint outer ring to be aligned on the same central axis by engaging, in a press-fit state, the smooth surface portion formed on one peripheral surface with the top lands of the spline teeth formed on the other peripheral surface at a portion in the axial direction in the spline engaging region of the central shaft of the constant velocity joint outer ring and the central hole of the hub spindle. Therefore, it is not necessary to precisely grind the male and female splines along their entire lengths in the axial direction in the spline engaging region, so machining costs can be reduced.

In the wheel bearing assembly described above, the smooth surface portion may be formed on a part of the inner peripheral surface of the central hole by eliminating a part of the female spline teeth. Also, a large diameter male spline portion, in which the top land diameter is set larger than the bore diameter of the smooth surface portion as well as larger than the top land diameter of a general portion of the male splines that contributes to power transfer, may be formed on a part of the male splines of the central shaft. Further, the large diameter male spline portion may be fitted in a press-fit state together with the inner peripheral surface of the smooth surface portion.

The structure enables the hub spindle and the central shaft of the constant velocity joint outer ring to be aligned on the same central axis by press fitting the top lands of the large diameter male spline portion of the central shaft together with the smooth surface portion of the central hole.

Also, in the wheel bearing assembly described above, the smooth surface portion may be provided at a middle portion in the axial direction of the central hole.

The structure suppresses reductions in torque transfer efficiency by having the portion where the large diameter male spline portion fits together with the smooth surface portion in a press-fit state be at the middle portion in the axial direction
where the side faces of the spline teeth of the male and female splines do not contact one another.

Also, in the wheel bearing assembly described above, the smooth surface portion may be formed, by a smooth shaft portion having no male spline teeth, on a part of the central shaft. Also, a small diameter female spline portion, in which the top land diameter is set smaller than the outside diameter of the smooth shaft portion as well as smaller than the top land diameter of a general portion of the female splines that contributes to power transfer, may be formed on a portion of the inner peripheral surface of the central hole. Further, the small diameter female spline portion may be fitted in a press-fit state together with the outer peripheral surface of the smooth shaft portion.

This structure enables the hub spindle and the central shaft of the constant velocity joint outer ring to be aligned on the same central axis by fitting the top lands of the small diameter female spline portion of the central hole together with the smooth shaft portion of the central shaft in a press-fit state.

Also, in the wheel bearing assembly described above, a meshing guide portion may be provided at an inner end portion of the spline teeth of female splines in a region where the spline teeth of the female splines mesh with the spline teeth of the male splines. Atop land inner diameter of meshing guide portion may be larger than the top land inner diameter of a portion, which is located on the outside, of the spline teeth of the female splines in the region where the spline teeth of the female splines mesh with the spline teeth of the male splines.

This structure enables improves workability with respect to press-fitting by having the smooth shaft portion of the central shaft press-fitted into the small diameter female spline portion while the male splines on the central shaft of the constant velocity joint outer ring are nicely and easily placed into mesh with the female splines in the central hole of the hub spindle.

A second aspect of the invention relates to a method of manufacturing a wheel bearing assembly according to the first aspect. This manufacturing method includes applying an anaerobic sealant to the spline teeth of at least one set of splines from among the male splines and the female splines, and splining the wheel hub and the constant velocity joint outer ring together by fitting the male splines and the female splines together.

Also, in the manufacturing method described above, the female spline teeth may be formed after forming a large diameter hole which has a hole diameter that is larger than the root diameter of the female spline teeth at a middle portion in the axial direction of the inner peripheral surface of the central hole formed in the hub spindle.

Also, in the manufacturing method described above, the male spline teeth may be formed after forming a small diameter shaft portion which has an outside diameter that is smaller than the root diameter of the male spline teeth at a middle portion in the axial direction of the outer peripheral surface of the central shaft of the constant velocity joint outer ring.

Also, in the manufacturing method described above, a smooth surface portion having no spline teeth may be formed on a part of the one peripheral from among the inner peripheral surface of the central hole and the outer peripheral surface of the central shaft. In addition, the smooth surface is formed at a part in a spline engaging region where the male splines mesh with the female splines. Also, the smooth surface portion and top lands of the spline teeth, which are provided on the other peripheral surface and which contact the smooth surface portion, may be abrased. Further, the smooth surface portion and the top lands of the spline teeth that contact the smooth surface portion may be fitted together in a press-fit state.

Also, in the manufacturing method described above, the smooth surface portion may be formed on a part of the inner peripheral surface of the central hole by eliminating a part of the female spline teeth. In addition, a large diameter male spline portion, in which the top land diameter is set larger than the bore diameter of the smooth surface portion as well as larger than the top land diameter of a general portion of the male splines that contributes to power transfer, may be formed on a portion of the male splines of the central shaft. Further, the smooth surface portion and the large diameter male spline portion may be abrased. Moreover, the large diameter male spline portion may be fitted in a press-fit state together with the inner peripheral surface of the smooth surface portion.

Also, in the manufacturing method described above, the smooth surface portion may be formed, as a smooth shaft portion that has no male spline teeth, on a part of the central shaft by eliminating a part of male spline teeth. In addition, a small diameter female spline portion, in which the top land diameter is set smaller than the outside diameter of the smooth shaft portion as well as smaller than the top land diameter of a general portion of the female splines that contributes to power transfer, may be formed on a part of the inner peripheral surface of the central hole. Further, the smooth shaft portion and the small diameter female spline portion may be abrased. Moreover, the small diameter female spline portion may be fitted in a press-fit state together with the outer peripheral surface of the smooth shaft portion.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 is a longitudinal sectional view of a wheel bearing assembly according to a first example embodiment of the invention;
FIG. 2 is a view of the first example embodiment, showing a meshing area where male splines on a portion of the central shaft of an outer ring of the CV joint mesh with female splines on a hub spindle of a wheel hub;
FIG. 3 is a longitudinal sectional view of the first example embodiment, showing the wheel hub removed from the CV joint;
FIG 4 is a view of a modified example of the first example embodiment, in which a cover member is attached to a cylindrical portion that protrudes toward a side of a flange of the wheel hub facing the outside of the vehicle;
FIG. 5 is a view of another modified example of the first example embodiment in which an O-ring is interposed in a calked portion at the tip end of the central shaft of the outer ring of the CV joint;
FIG 6 is a view of yet another modified example of the first example embodiment in which packing is interposed in the calked portion at the tip end of the central shaft of the outer ring of the CV joint;
FIG. 7 is a longitudinal sectional view of a wheel bearing assembly according to a second example embodiment of the invention;
FIG. 8 is a longitudinal sectional view of a wheel bearing assembly according to a third example embodiment of the invention;
FIG. 9 is a longitudinal sectional view of the third example embodiment, showing the wheel hub removed from the CV joint;
FIG 10 is a longitudinal sectional view of a wheel bearing assembly according to a fourth example embodiment of the invention;
FIG 11 is a longitudinal sectional view of the fourth example embodiment, showing the wheel hub removed from the CV joint;
FIG 12 is a longitudinal sectional view of a wheel bearing assembly according to a fifth example embodiment of the invention;
FIG 13 is a longitudinal sectional view of the fifth example embodiment, showing the wheel hub removed from the CV joint;
FIG 14 is a longitudinal sectional view of a wheel bearing assembly according to a sixth example embodiment of the invention;
FIG. 15 is a longitudinal view of the sixth example embodiment, showing an enlarged view of a spline engaging region of male splines on the central shaft of the CV joint outer ring and female splines in the central hole provided in the hub spindle of the wheel hub;
FIG 16 is a longitudinal sectional view of the sixth example embodiment, showing the wheel hub removed from the CV joint outer ring;
FIG 17 is an enlarged longitudinal view of a spline engaging region of male splines on a central shaft of a CV joint outer ring and female splines in the central hole provided in a hub spindle of a wheel hub of a wheel bearing assembly according to a seventh example embodiment of the invention;
FIG 18 is a longitudinal sectional view of the seventh example embodiment, showing the wheel hub removed from the CV joint outer ring; and
FIG. 19 is a view of the seventh example embodiment, showing the initial state when the male and female splines are in mesh.

### DETAILED DESCRIPTION OF EMBODIMENTS

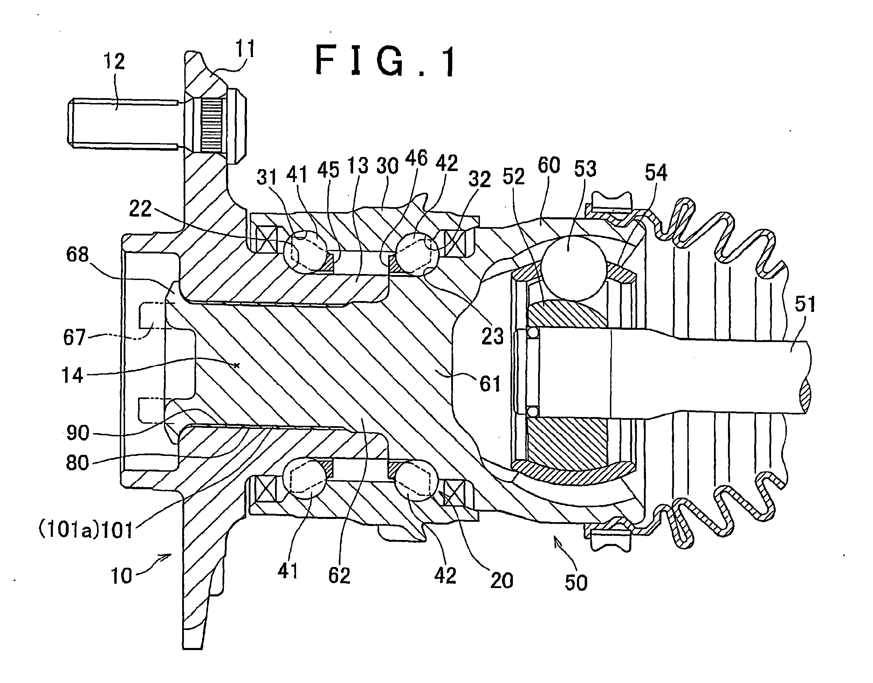

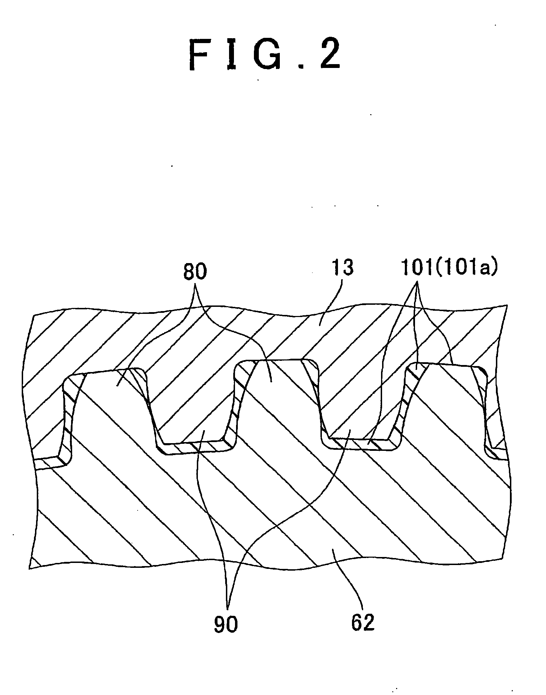

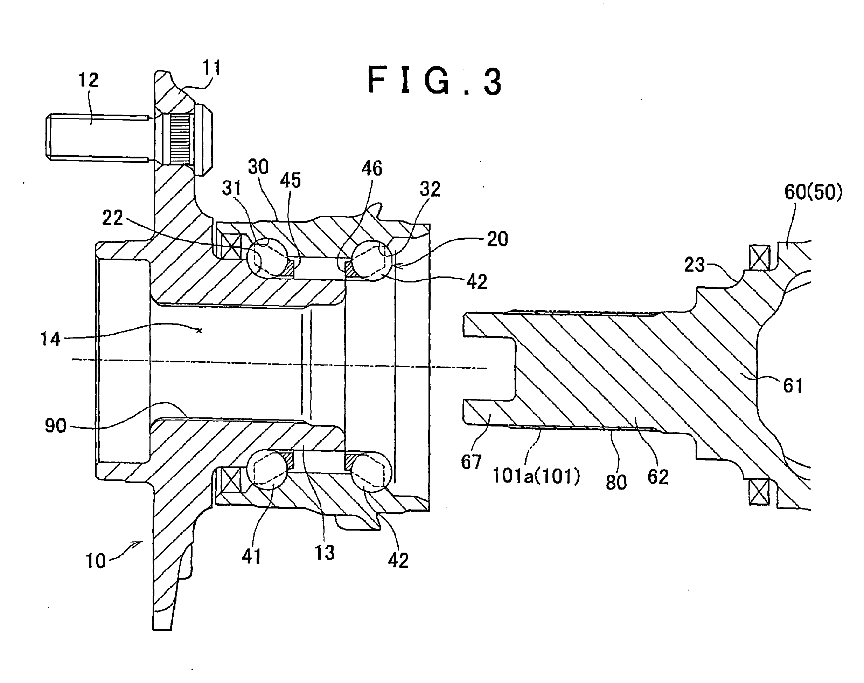

A first example embodiment of the invention will now be described with reference to FIGS. 1 and 2. FIG. 1 is a longitudinal sectional view of a wheel bearing assembly according to the first example embodiment of the invention. FIG. 2 is a view of the portion where male splines on the central shaft of the outer ring of the constant velocity (CV) joint mesh with female splines on the hub spindle of the wheel hub. FIG 3 is longitudinal sectional view showing the wheel hub removed from the CV joint. It should be noted that the left side of FIG. 1 faces toward the outside of the vehicle, and the right side in FIG. 1 faces toward the inside of the vehicle. Accordingly, the left side in FIG. 1 will hereinafter be referred to as the outside, and the right side in FIG. 1 will hereinafter be referred to as the inside.

As shown in FIG 1, the wheel bearing assembly according to the first example embodiment includes a wheel hub 10, a double-row angular contact ball bearing 20as a roller bearing, and a constant velocity (CV) joint 50. The CV joint 50 used here is generally referred to as a Rzeppa joint or a Birfield joint, and includes an inner ring 52 that is integrally coupled to the outer peripheral surface of the outer end portion of a drive shaft 51, an outer ring 60, a plurality of balls 53 arranged between the inner ring 52 and the outer ring 60, and a cage 54 that retains the plurality of balls 53. Also, a central shaft 62 that integrally couples a wheel hub 10 to the CV joint 50 protrudes from the center portion of an end wall portion 61 of the CV joint outer ring 60. A cylindrical first annular protrusion 67 that forms a calked portion 68 is provided at the tip of this central shaft 62.

The wheel hub 10 has a cylindrical hub spindle 13 and a flange 11 that is formed on the outer peripheral portion near the outer end portion of the hub spindle 13.
The flange 11 is formed integrally with the hub spindle 13. A plurality of hub bolts 12 for mounting a wheel, not shown, via a brake rotor, also not shown, are press fitted to the flange 11 at predetermined intervals.

The double-row angular contact ball bearing 20 rotatably supports the wheel hub 10 and the CV joint outer ring 60 on a knuckle (not shown), which serves as a vehicle body member, is assembled spanning from the outer peripheral surface of the hub spindle 13 of the wheel hub 10 to the outer peripheral surface of the end wall portion 61 of the CV joint outer ring 60. Also; the angular contact ball bearing 20 includes a ball bearing outer ring 30, a plurality of balls 41 and 42 as rolling elements, and cages 45 and 46.

That is, in this first example embodiment, a raceway surface 22 is formed on the outer peripheral surface of the hub spindle 13, near the flange 11, facing the outer raceway surface 31 of the ball bearing outer ring 30 and a raceway surface 23 is formed on the outer peripheral surface of the end wall portion 61 of the CV joint outer ring 60 facing the inner raceway surface 32 of the ball bearing outer ring 30.

In addition, female splines 90 that extend in the axial direction are formed on the inner peripheral surface of a central hole 14 that extends through the center of the hub spindle 13, and male splines 80, which extend in the axial direction and fit into the female splines 90, are formed on the outer peripheral surface of the central shaft 62 of the CV joint outer ring 60, to spline engage the hub spindle 13 of the wheel hub 10 with the CV joint outer ring 60 so that torque can be transferred between the two components. The spline teeth that form the male splines 80 extend in the axial direction and are helically formed at an appropriate lead angle in the circumferential direction. Also, the spline teeth that form the female splines 90 extend parallel in the axial direction. On the other hand, the spline teeth of the male spline 80 may extend parallel in the axial direction. Also, the spine teeth of female spline 90 may extend in the axial direction and are helically formed an appropriate lead angle in the circumferential direction.

Then the male splines 80 on the central shaft 62 of the CV joint outer ring 60 are placed into mesh, i.e., spline engaged, with the female splines 90 in the central hole 14 of the hub spindle 13 of the wheel hub 10. Then the first annular protrusion 67 at the tip of the central shaft 62 is calked radially outward along the outer end surface of the hub spindle 13 so as to form the calked portion 68. As a result, the hub spindle 13 is integrally fastened to the CV joint outer ring 60, thereby allowing the transfer of torque between the hub spindle 13 and the CV joint outer ring 60.

A seal layer 101 made of an anaerobic sealant 101a is provided to seal a gap where the male splines 80 mesh with the female splines 90. The anaerobic sealant 101a is a sealant that cures in the absence of air, and does not contain a flammable solvent. The seal layer 101 is formed by applying the anaerobic sealant 101a to the entire surface from the bottom lands to the top lands of the spline teeth of the splines 80 and/or 90 (in this example embodiment, the male splines 80) before the male splines 80 are spline engaged with the female splines 90.

Therefore, with the wheel bearing assembly according to the first example embodiment, the gap where the male splines 80 on the CV joint outer ring 60 meshes with the female splines 90 on the hub spindle 13 is sealed by the seal layer 101 made of the anaerobic sealant 101a, as shown in FIG. 2. Hence, even if water accidentally enters through a slight gap between the calked portion 68 and the hub spindle 13, where the hub spindle 13 is fastened to the central shaft 62 of the CV joint outer ring 60 t, the seal layer 101 is able to prevent the water from entering the meshing area (i.e., the engaging area) of the male and female splines 80 and 90, which is farther back behind the calked portion 68. As a result, it is possible to prevent the meshing area of the male and female splines 80 and 90 from rusting, as well as prevent water from accidentally getting into the angular contact ball bearing 20, which serves as a roller bearing. Also, the seal layer 101 made of the anaerobic sealant 101a does not contain a flammable solvent component so it will not become much thinner when it hardens, which enables the water proofing property to be maintained over an extended period of time.

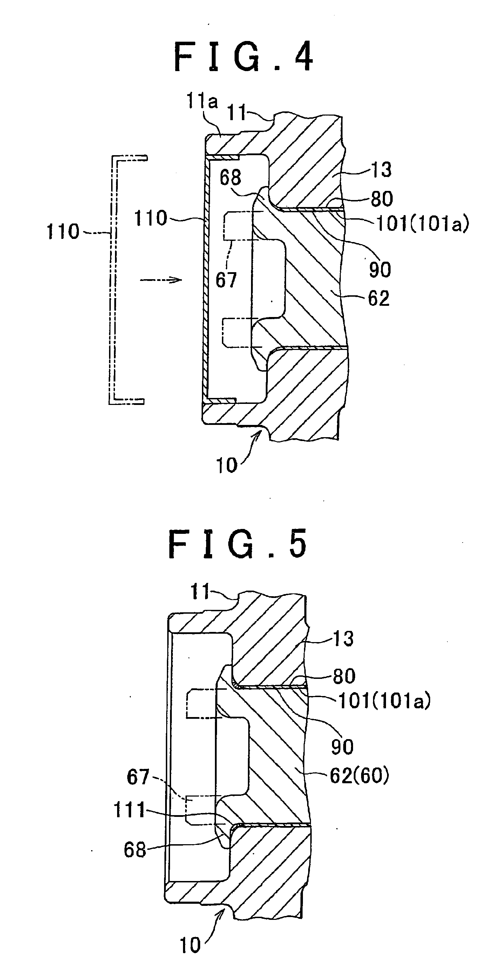

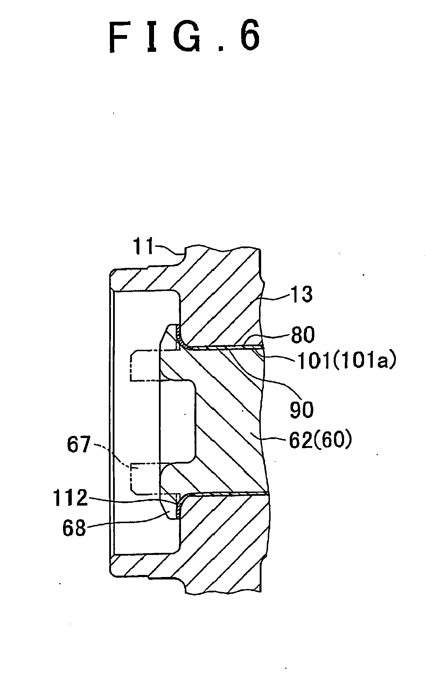

Also, in the wheel bearing assembly according to this first example embodiment, a metal or synthetic resin cover member 110 is press-fitted into a cylindrical second annular protrusion 11a that protrudes from the outer end surface of the flange 11 of the wheel hub 10, as shown in FIG 4, thereby sealing the area between the second annular protrusion 11a and the cover member 110. That is, a double (watertight) seal can also be created by the anaerobic sealant 101a of the seal layer 101 together with the cover member 110. Or, a double (watertight) seal may also be formed by installing an O-ring 111 made of an elastic body at the boundary portion between the outer open end portion of the central hole 14 of the hub spindle 13 and the first annular protrusion 67 provided at the tip of the central shaft 62 of the CV joint outer ring 60, before forming the calked portion 68 by calking the first annular protrusion 67 radially outward, as shown in FIG. 5. Alternatively, a double (watertight) seal can also be created by installing annular packing 112 made of an elastic body at the boundary between the outer open end portion of the central hole 14 of the hub spindle 13 and the first annular protrusion 67 provided at the tip of the central shaft 62 of the CV joint outer ring 60, before forming the calked portion 68 by calking the first annular protrusion 67 radially outward, as shown in FIG. 6.

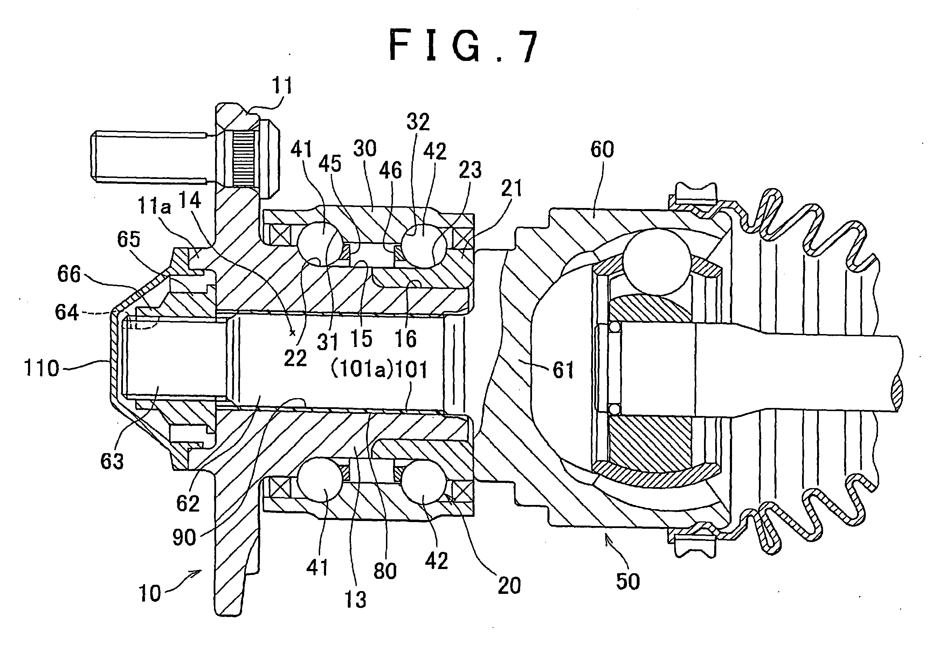

Next, a second example embodiment of the invention will be described with reference to FIG. 7, which is a longitudinal sectional view of a wheel bearing assembly according to the second example embodiment of the invention. In the following description of the second example embodiment, portions that are similar to or the same as portions in the first example embodiment will be denoted by the same reference numerals used the first example embodiment. As shown in FIG. 7, in the wheel bearing assembly according to this second example embodiment, a double-row angular contact ball bearing 20 that includes a ball bearing outer ring 30, a ball bearing inner ring 21, a plurality of balls 41 and 42 that serve as rolling elements, and cages 45 and 46 is assembled on the outer periphery of a hub spindle 13 of a wheel hub 10.

More specifically, as shown in FIG. 7, the wheel bearing assembly has a large diameter shaft portion 15 formed on the outer peripheral surface of the hub spindle 13 near a flange 11, and a small diameter shaft portion 16 formed with a suitably small diameter toward the inside of the large diameter shaft portion 15, and continuous (i.e., integrated), via a stepped portion, with the large diameter shaft portion 15. A raceway surface 22 is formed on the outer peripheral surface of the large diameter shaft portion 15 facing the outer raceway surface 31 of the ball bearing outer ring 30. Further, a raceway surface 23 is formed on the outer peripheral surface of the ball bearing inner ring 21 facing the inner raceway surface 32 of the ball bearing outer ring 30. The ball bearing inner ring 21is press-fitted onto the outer peripheral surface of the small diameter shaft portion 16 of the hub spindle 13. Also, the plurality of balls 41 and 42 and cages 45 and 46 which retain the plurality of balls 41 and 42, respectively, are assembled between the raceway surfaces 31 and 32 of the ball bearing outer ring 30 and the raceway surfaces 22 and 23 on the hub spindle 13 side. Further, a fixed flange, not shown, for bolting the ball bearing outer ring 30 to a vehicle body side member (e.g., a knuckle or a carrier) that is supported by the suspension system, not shown, of the vehicle, is integrally formed on the outer peripheral surface of the ball bearing outer ring 30.

Also, an externally threaded portion 63 is formed at the tip end portion of a central shaft 62 that protrudes from an end wall portion 61 of a CV joint outer ring 60. A concave calk groove 64 that prevents a locknut 65 from unscrewing is provided in the externally threaded portion 63. Also, female splines 90, which are formed extending in the axial direction on the inner peripheral surface of a central hole 14 that extends through the center of the hub spindle 13, are spline engaged with male splines 80 that are formed extending in the axial direction on the outer peripheral surface of the central shaft 62 of the CV joint outer ring 60. Then the locknut 65 is screwed onto the externally threaded portion 63 of the central shaft 62. Finally, a portion of a thin portion 66 of the end portion of the locknut 65 is calked into the calk groove 64 of the externally threaded portion 63 to prevent the locknut 65 from unscrewing. As a result, the hub spindle 13 and the CV joint outer ring 60 are integrally fastened to one another such that torque may be transferred therebetween.

Also, a seal layer 101 made of an anaerobic sealant 101a that seals a gap at a meshing area where the male splines 80 on the CV joint outer ring 60 mesh with the female splines 90 on the hub spindle 13 is provided, just as in the first example embodiment. Therefore, even if water accidentally enters through a slight gap between the externally threaded portion 63 and the locknut 65 that serves as the fastening portion for coupling the hub spindle 13 and the central shaft 62 of the CV joint outer ring 60 together, the seal layer 101 is able to prevent that water from entering the meshing area (i.e., the engaging area) of the male and female splines 80 and 90, which is farther back behind the locknut 65. As a result, it is possible to prevent the meshing area of the male and female splines 80 and 90 from rusting, as well as prevent water from accidentally getting into the angular contact ball bearing 20 which serves as a roller bearing. Also, in this second example embodiment, a double (watertight) seal may also be created by press-fitting a metal or synthetic resin cover member 110 into a second annular protrusion 11a that protrudes from the outer side surface of the flange 11 of the wheel hub 10, as shown in FIG. 7.

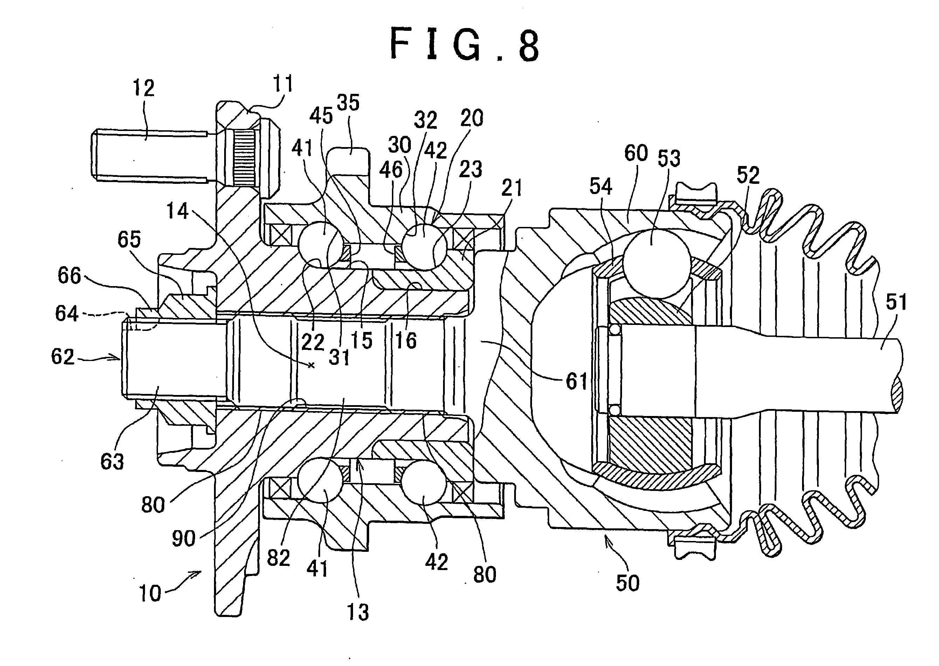

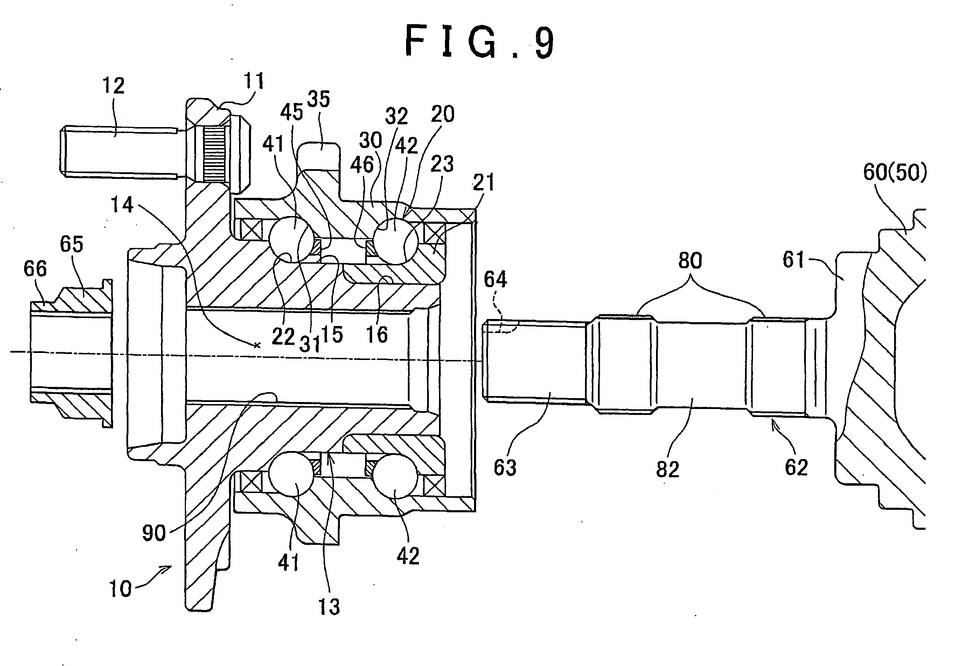

Next, a third example embodiment of the invention will be described with reference to FIGS. 8 and 9. FIG 8 is a longitudinal sectional view of a wheel bearing assembly according to the third example embodiment of the invention, and FIG 9 is a longitudinal sectional view of the third example embodiment, which shows the wheel hub removed from the CV joint. In the following description of the third example embodiment, portions that are similar to or the same as portions in the first and second example embodiments will be denoted by the same reference numerals used the first and second example embodiments.

As shown in FIG. 8, the wheel bearing assembly includes a wheel hub 10, a double-row angular contact ball bearing 20 that functions as a roller bearing, and a constant velocity (CV) joint 50. The wheel hub 10 has a cylindrical hub spindle 13 and a flange 11 that is formed on the outer periphery near the outer end portion of the hub spindle 13. The flange 11 is formed integrally with the hub spindle 13. Then, a plurality of hub bolts 12 for mounting a wheel, not shown, via a brake rotor, also not shown, are fixed to the flange 11 at predetermined intervals by press-fitting. A double-row angular contact ball bearing 20 that includes a ball bearing outer ring 30, a plurality of balls 41 and 42 as rolling elements, and cages 45 and 46 is assembled on the outer periphery of the hub spindle 13.

Similar to the second example embodiment, the wheel hub 10 of the wheel bearing assembly according to this third example embodiment has a large diameter shaft portion 15 formed on the outer peripheral surface of the hub spindle 13 near a flange 11, and a small diameter shaft portion 16 formed with a suitably small diameter toward the inside of the large diameter shaft portion 15, and continuous (i.e., integrated), via a stepped portion, with the large diameter shaft portion 15. A raceway surface 22 is formed on the outer peripheral surface of the large diameter shaft portion 15 facing the outer raceway surface 31 of the ball bearing outer ring 30. Further, a raceway surface 23 is formed on the outer peripheral surface of the ball bearing inner ring 21 facing the inner raceway 32of the ball bearing outer ring 30. The ball bearing inner ring 21 is press-fitted onto the outer peripheral surface of the small diameter shaft portion 16 of the hub spindle 13. Also, the plurality of balls 41 and 42 and cages 45 and 46 which retain the plurality of balls 41 and 42, respectively, are assembled between the raceway surfaces 31 and 32 of the ball bearing outer ring 30 and the raceway surfaces 22 and 23 on the hub spindle 13 side. Further, a flange 35 for bolting the wheel bearing assembly to a vehicle body member (e.g., a knuckle or a carrier) that is supported by the suspension system, not shown, of the vehicle, is integrally formed on the outer peripheral surface of the ball bearing outer ring 30.

As shown in FIG 8, a conventional CV joint, referred to as a Rzeppa joint or a Birfield joint, is used and the CV joint includes a CV joint inner ring 52 that is integrally coupled to one end of a drive shaft 51, a CV joint outer ring 60, a plurality of balls 53 arranged between the CV joint inner ring 52 and the CV joint outer ring 60, and a cage 54 that retains the plurality of balls 53. Also, a central shaft 62 for integrally coupling a wheel hub 10 to the CV joint 50 protrudes from the center portion of an end wall portion 61 of the CV joint outer ring 60. An externally threaded portion 63 is formed at the tip end portion of a central shaft 62, and a concave calk groove 64 for preventing a locknut 65 from unscrewing is provided in the externally threaded portion 63.

As shown in FIGS. 8 and 9, female splines 90 that extend in the axial direction are formed on the inner peripheral surface of the central hole 14 that extends through the center of the hub spindle 13, and male splines 80 which extend in the axial direction and fit into the female splines 90 are formed on the outer peripheral surface of the central shaft 62 of the CV joint outer ring 60, in order to spline engage the hub spindle 13 of the wheel hub 10 with the CV joint outer ring 60 so that torque can be transferred therebetween. The spline teeth that form the male splines 80 extend in the axial direction and are helically formed at an appropriate lead angle in the circumferential direction. Also, the spline teeth that form the female splines 90 extend parallel in the axial direction. On the other hand, the spline teeth of the male spline 80 may extend parallel in the axial direction. Also, the spline teeth of female spline 90 may extend in the axial direction and are helically formed an appropriate lead angle in the circumferential direction.

A non-meshing area where the spline teeth do not mesh is provided at a middle portion in the axial direction of the male splines 80 and/or the female splines 90. That is, a non-meshing area provided at a location that does not contribute to the transfer of torque, in which the male spline teeth and the female spline teeth never mesh when the male splines 80 and the female splines 90 are spline engaged. In the third example embodiment, a small diameter shaft portion 82, which has a smaller outside diameter than the root diameter of the spline teeth of the male splines 80, is formed at the middle portion in the axial direction of the male splines 80 formed on the central shaft 62 of the CV joint outer ring 60. The non-meshing area is formed by this small diameter shaft portion 82 of the central shaft 62.

In the wheel bearing assembly according to the third example embodiment, when integrally coupling the hub spindle 13 of the wheel hub 10 to the CV joint outer ring 60 so that torque may be transferred between the two, the male splines 80 are first spline press-fitted from the inside (i.e., the inside in the vehicle width direction) toward the outside (i.e., the outside in the vehicle width direction) while they are placed into mesh with the female splines 90. Then, the externally threaded portion 63 at the tip of the central shaft 62 is made to protrude from the central hole 14 of the hub spindle 13, and the locknut 65 is screwed onto the externally threaded portion 63 of the central shaft 62.
Finally, a portion of a thin portion 66 of the end portion of the locknut 65 is calked into the calk groove 64•of the externally threaded portion 63 to prevent the locknut 65 from unscrewing. As a result, the hub spindle 13 and the CV joint outer ring 60 are integrally fastened to one another so that torque can be transferred therebetween (see FIG. 8).

As described above, when the male and female splines 80 and 90 are splined together, the lead angle of the spline teeth of the male splines 80 causes the large diameter faces of the male splines 80 and the bottom lands of the female splines 90, as well as the opposing faces of the spline teeth (tooth faces) of the splines 80 and 90, to contact one another so that there is no gap in between at both the outer and inner end portions in the axial direction of the male and female splines 80 and 90. As a result, the hub spindle 13 and the CV joint outer ring 60 are splined together to facilitate efficient torque transfer between the hub spindle 13 and the CV joint outer ring 60.

In particular, in the third example embodiment, it is possible to reduce the weight of the central shaft 62 of the CV joint outer ring 60 without adversely effecting torque transfer performance by providing the small diameter shaft portion 82 as a non-meshing area by forming in the male splines 80 at the middle portion in the axial direction where the male splines 80 are formed. Also, machining costs of the male splines 80 may be reduced by forming the small diameter shaft portion 82 at a predetermined position on the central shaft 62 before forming the male splines 80 on the outer peripheral surface of the central shaft 62.

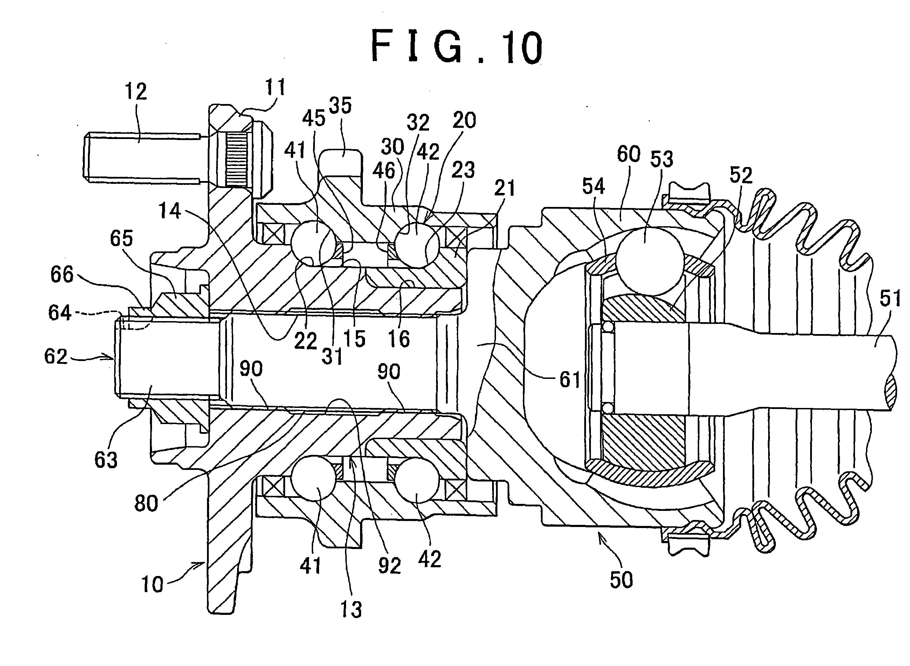

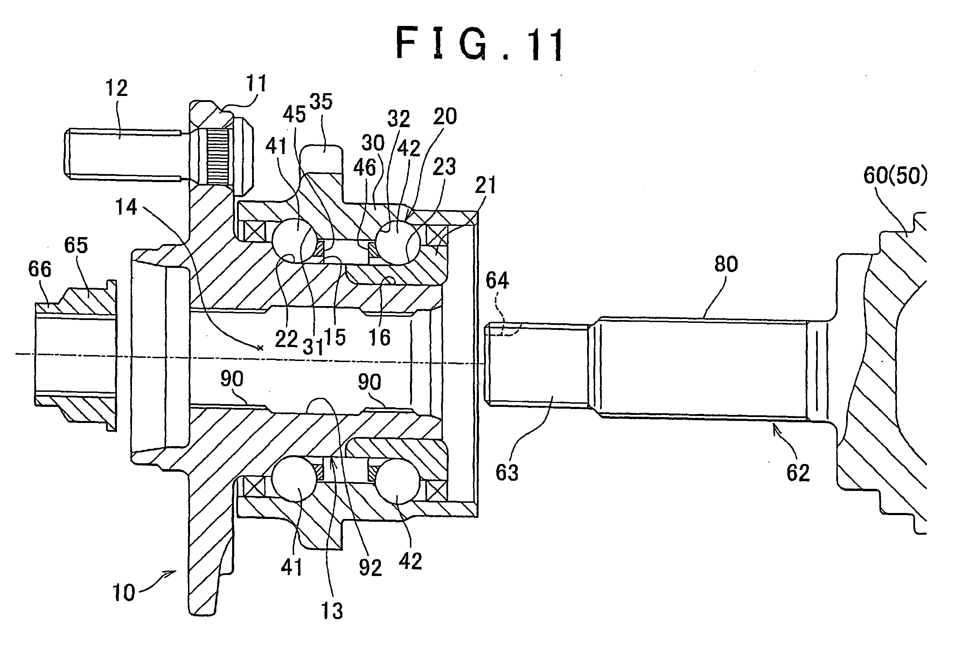

Next, a fourth example embodiment of the invention will be described with reference to FIGS. 10 and 11. FIG 10 is a longitudinal sectional view of a wheel bearing assembly according to the fourth example embodiment of the invention, and FIG. 11 is a longitudinal sectional view of the fourth example embodiment, which shows the wheel hub removed from the CV joint.

As shown in FIGS. 10 and 11, in this fourth example embodiment, male splines 80 which extend in the axial direction are formed continuously on the outer peripheral surface of the central shaft 62 of the CV joint outer ring 60. On the other hand, a large diameter hole 92, which has a diameter that is larger than the root diameter of the spline teeth of the female splines 90, is formed in the female splines 90 at the middle portion in the axial direction of the female splines 90. A non-meshing area is formed by the large diameter hole 92. The other structure of the fourth example embodiment is the same as that of the third example embodiment, accordingly like or corresponding portions will be denoted by the same reference characters and descriptions of those portions will be omitted.

Therefore, in the wheel bearing assembly of the fourth example embodiment, it is possible to reduce the weight of the hub spindle 13 by the large diameter hole portion 92 as the non-meshing area by forming in the female splines 90 at the middle portion in the axial direction where the female splines 90 are formed. Also, machining costs of the female splines 90 may be reduced by forming the large diameter hole92 at a predetermined position in the central hole 14 of the hub spindle 13 before forming the female splines 90, which are formed extending in the axial direction, on the inner peripheral surface of the central hole 14 of the hub spindle 13.

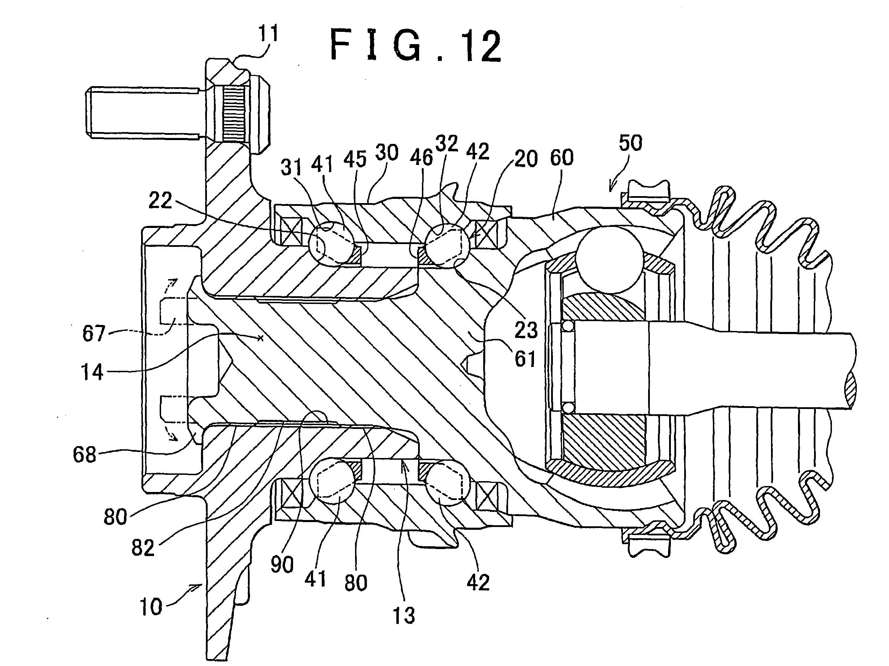

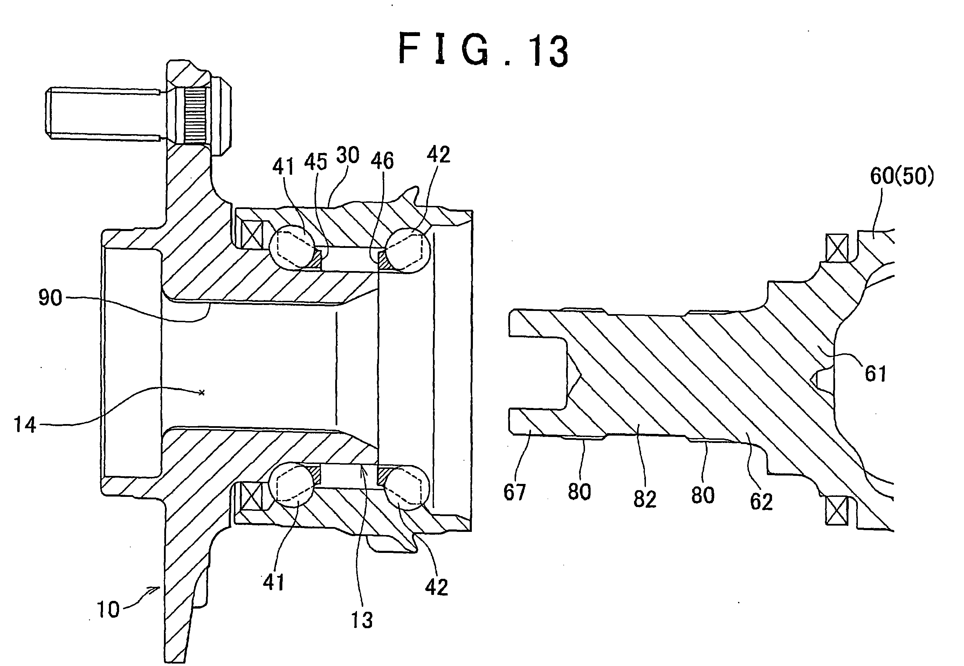

Next, a fifth example embodiment of the invention will be described with reference to FIGS. 12 and 13. FIG. 12 is a longitudinal sectional view of a wheel bearing assembly according to the fifth example embodiment of the invention, and FIG 13 is a longitudinal sectional view of the fifth example embodiment, which shows the wheel hub removed from the CV joint.

As shown in FIGS. 12 and 13, in the wheel bearing assembly according to the fifth example embodiment, a double-row angular contact ball bearing 20 which includes a ball bearing outer ring 30, a plurality of balls 41 and 42 that serve as rolling elements, and cages 45 and 46, is assembled spanning from the outer peripheral surface of the hub spindle 13 of the wheel hub 10 to the outer peripheral surface of the end wall portion 61 of the CV joint outer ring 60 of the CV joint 50.

That is, in the fifth example embodiment, the raceway surface 22 is formed on the outer peripheral surface of the hub spindle 13 near the flange 11 facing the outer raceway surface 31 of the ball bearing outer ring 30, and a raceway surface 23 is formed on the outer peripheral surface of the end wall portion 61 of the CV joint outer ring 60 facing the inner raceway surface 32 of the ball bearing outer ring 30.

Also, female splines 90 that extend in the axial direction are formed on the inner peripheral surface of the central hole 14 that extends through the center of the hub spindle 13, and male splines 80 which extend in the axial direction and fit into the female splines 90 are formed on the outer peripheral surface of the central shaft 62 of the CV joint outer ring 60, in order to spline engage the hub spindle 13 of the wheel hub 10 with the CV joint outer ring 60 so that torque may be transferred therebetween. The spline teeth that form the male splines 80 extend in the axial direction and are helically formed at an appropriate lead angle in the circumferential direction. Also, the spline teeth that form the female splines 90 extend parallel in the axial direction. On the other hand, the spline teeth of the male spline 80 may extend parallel in the axial direction. Also, the spline teeth of female spline 90 may extend in the axial direction and are helically formed an appropriate lead angle in the circumferential direction. Moreover, as described in the third example embodiment, in this embodiment as well, a small diameter shaft portion 82 that has a smaller outside diameter than the root diameter of the spline teeth of the male splines 80 is formed at the middle portion in the axial direction of the male splines 80 formed on the central shaft 62. The non-meshing area is formed by the small diameter shaft portion 82 of the central shaft 62.

In addition, in the fifth example embodiment, a cylindrical protrusion 67, which is later calked, is formed at the tip of the central shaft 62 of the CV joint outer ring 60, as shown in FIG. 13. Then the male splines 80 formed on the central shaft 62 are press-fitted once they are meshed with the female splines 90. Then, the cylindrical protrusion 67 at the tip of the central shaft 62 is calked radially outward along the outer end surface of the hub spindle 13 to thereby form the calked portion 68. As a result, the hub spindle 13 is integrally fastened to the CV joint outer ring 60so that torque can be transferred therebetween.

Therefore, with the wheel bearing assembly according to the fifth example embodiment, it is possible to reduce the weight of the central shaft 62 of the CV joint outer ring 60 by providing the small diameter shaft portion 82 as a non-meshing area at the middle portion in the axial direction where the male splines 80 on the central shaft 62 of the CV joint outer ring 60 are formed. Also, machining costs of the male splines 80 may be reduced by forming the small diameter shaft portion 82 at a predetermined position on the central shaft 62 before forming the male splines 80, which extend in the axial direction on the outer peripheral surface of the central shaft 62. Further, the fifth example embodiment is able to obtain the same operation and effects that are described in the fourth example embodiment even if a non-meshing area is provided by forming a large diameter holeat the middle portion in the axial direction where the female splines 90 provided in the central hole 14 of the hub spindle 13 are formed.

Just as in the first and second example embodiments, a seal layer of anaerobic sealant may also be provided where the male splines 90 mesh with the female splines 80 in the third, fourth, and fifth example embodiments (not shown).

Furthermore, in the third, fourth, and fifth example embodiments, a large diameter holeor a small diameter shaft portion is applied to the male splines 80 or the female splines 90. Alternatively, however, a small diameter shaft portion may be formed having the male splines 80 and a large diameter holemay be formed having the female splines 90. In this case, the weight can be further reduced compared with the third, fourth, and fifth example embodiments.

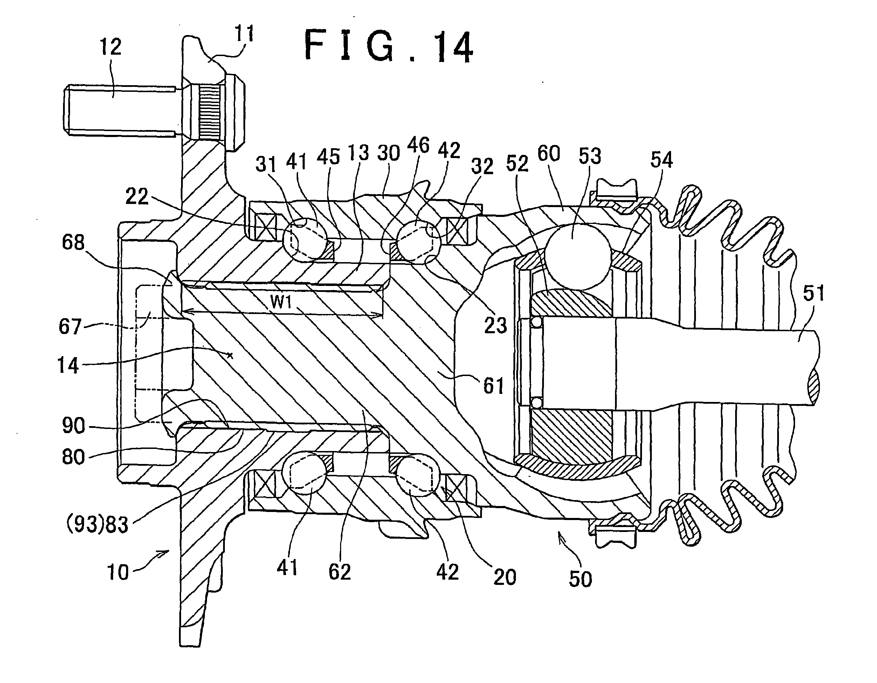

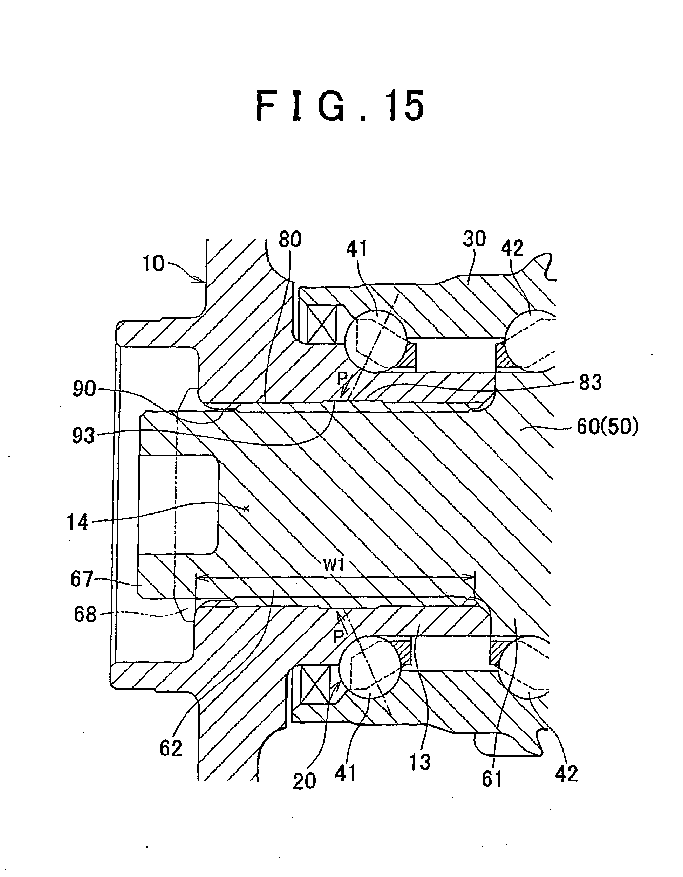

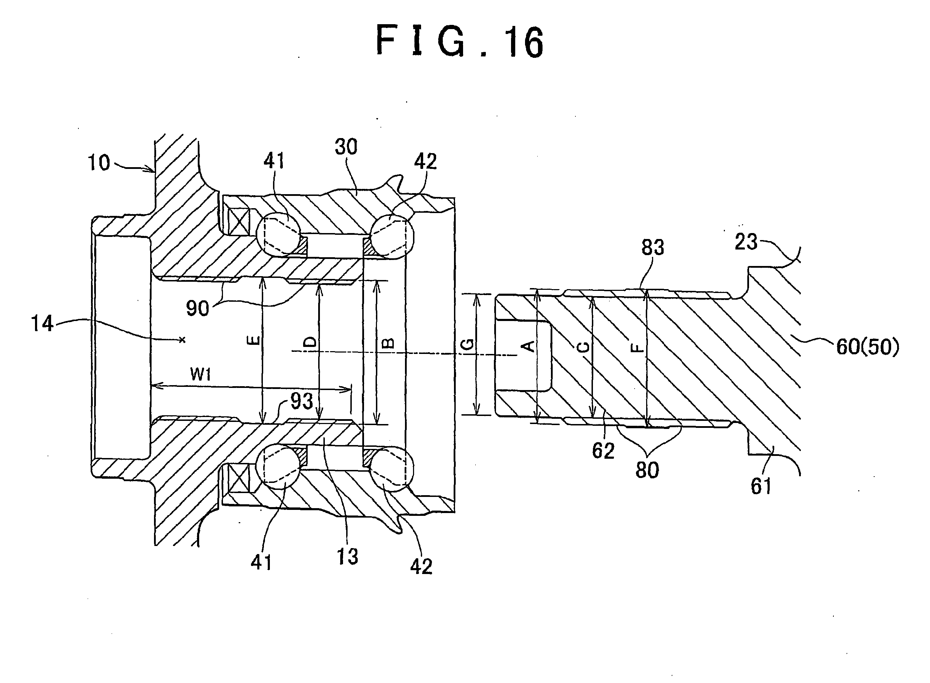

Next, a sixth example embodiment of the invention will be described with reference to FIGS. 14 to 16. FIG 14 is a longitudinal sectional view of a wheel bearing assembly according to the sixth example embodiment of the invention. FIG 15 is a longitudinal view of the sixth example embodiment, which shows an enlarged view of the spline engaging region of the male splines on the central shaft of the CV joint outer ring and the female splines in the central hole of the hub spindle of the wheel hub. FIG. 16 is a longitudinal sectional view of the sixth example embodiment, which shows the wheel hub removed from the CV joint outer ring. In the following description of the sixth example embodiment, portions that are similar to or the same as portions in the first through the fifth example embodiments will be denoted by the same reference numerals used in the first through the fifth example embodiments.

As shown in FIG 14, the wheel bearing assembly according to the sixth example embodiment includes a wheel hub 10, a double-row angular contact ball bearing 20 as a roller bearing, and a constant velocity (CV) joint 50. The CV joint 50 used here is a conventional CV joint referred to as a Rzeppa joint or a Birfield joint, and includes a CV joint inner ring 52 that is integrally coupled to the outer peripheral surface of the outer end of a drive shaft 51, a CV joint outer ring 60, a plurality of balls 53 arranged between the CV joint inner ring 52 and the CV joint outer ring 60, and a cage 54 that retains the plurality of balls 53. Also, a central shaft 62 for integrally coupling a wheel hub 10 to the CV joint outer ring 60 protrudes from the center portion of an end wall portion 61 of the CV joint outer ring 60. A cylindrical protrusion 67 for forming a calked portion 68 is formed at the tip of this central shaft 62.

The wheel hub 10 has a cylindrical hub spindle 13 and a flange 11 that is formed on the outer periphery near the outer end of the hub spindle 13. The flange 11 is formed integrally with the hub spindle 13. A plurality of hub bolts 12 for mounting a wheel, not shows, via a brake rotor, also not shown, are fixed to the flange 11 at predetermined intervals by press-fitting.

A double-row angular contact ball bearing 20, which includes a ball bearing outer ring 30, a plurality of balls 41 and 42 that serve as rolling elements, and cages 45 and 46, is assembled spanning from the outer peripheral surface of the hub spindle 13 of the wheel hub 10 to the outer peripheral surface of the end wall portion 61 of the CV joint outer ring 60.

That is, in the sixth example embodiment, the raceway surface 22 is formed on the outer peripheral surface of the hub spindle 13 near the flange 11 facing the outer raceway surface 31 of the ball bearing outer ring 30, and the raceway surface 23 is formed on the outer peripheral surface of the end wall portion 61 of the CV joint outer ring 60 facing the inner raceway surface 32 of the ball bearing outer ring 30.

The central shaft 62 that protrudes from the center of the end wall portion 61 of the CV joint outer ring 60 is spline engaged to a central hole 14 that extends through the center of the hub spindle 13 of the wheel hub 10 so that torque may be transmitted between the CV joint outer ring 60 and the hub spindle 13. Then a cylindrical protrusion 67 at the tip of the central shaft 62 is calked radially outward along the outer end surface of the hub spindle 13 to form a calked portion 68. As a result, the hub spindle 13 and the CV joint outer ring 60 are integrally fastened together so that torque can be transmitted between the hub spindle 13 and the CV joint outer ring 60. That is, female splines 90 that extend in the axial direction are formed on the inner peripheral surface of the central hole 14 of the hub spindle 13, and male splines 80 which extend in the axial direction and fit into the female splines 90 are formed on the outer peripheral surface of the central shaft 62 of the CV joint outer ring 60.

As shown in FIG. 16, the outside diameter (i.e., the top land diameter) A of a general portion of the male splines 80, which contributes to the transfer of torque from among the males splines 80, is set smaller than the root diameter B of the female splines90. Furthermore, the root diameter C of the male splines 80 is set smaller than the inner diameter (i.e., the top land diameter) D of the female splines 90. Moreover, the spline teeth that form the male splines 80 extend in the axial direction and are helically formed at an appropriate lead angle in the circumferential direction. Also, the spline teeth that form the female splines 90 extend parallel in the axial direction. On the other hand, the spline teeth of the male spline 80 may extend parallel in the axial direction. Also, the spline teeth of female spline 90 may extend in the axial direction and are helically formed an appropriate lead angle in the circumferential direction. As a result, the side faces of the end portions in the axial direction of the spline teeth that form the male splines 80 contact the side faces of the spline teeth that form the female splines 90, thereby transferring torque, while the middle portions do not contact one another.

As shown in FIGS. 14 and 15, in a spline engaging region W1 of the male splines 80 on the central shaft62 of the CVjoint outer ring 60 and the female splines 90 in the central hole 14 of the hub spindle 13, a smooth surface portion with no spline teeth is formed in the circumferential direction at a portion in the axial direction in the spline engaging region W1 on one peripheral surface, on either the inner peripheral surface of the central hole 14 or the outer peripheral surface of the central shaft 62, and the smooth surface portion and the top lands of the spline teeth on the other peripheral surface are press fitted together. In the sixth example embodiment, the smooth surface portion is formed by a large diameter hole93, which is formed at a portion in the axial direction of the central hole 14 in the spline engaging region W1, as shown in FIG 16. Incidentally, the bore diameter E of the large diameter hole93 is set either the same as the root diameter B of the female splines 90 that contribute to torque transfer or slightly larger than the root diameter B. Meanwhile, a large diameter male spline 83, which has an outside diameter F that is slightly larger than the bore diameter E of the large diameter hole93 and has a top land that is press-fitted against the inner peripheral surface of the large diameter hole93, is formed on a portion in the axial direction of the male splines 80 of the central shaft 62. The outside diameter F of this large diameter male spline portion 83 is set slightly larger than the outside diameter (i.e., the top land diameter) A of a general portion of the male splines 80. Moreover, the inner peripheral surface of the large diameter hole93 and the top land (i.e., the outside diameter surface) of the large diameter male spline portion 83 are machined with high precision by grinding.

Also, in this sixth example embodiment, the position in the axial direction of the press-fit engaging portion of the large diameter hole(i.e., the smooth surface portion) 93 and the large diameter male spline portion 83 is set such that, when the bearing rotates acts in the direction of arrow P in FIG 15 the load on the balls 41 of the angular contact ball bearing 20is received by the press-fit engaging portion. Further, the press-fit engaging portion of the large diameter hole93 and the large diameter male spline portion 83 is set to be the middle portion in the axial direction (i.e., the non-contact region) where the side faces of the spline teeth of the male and female splines 80 and 90 do not come into contact with one another, such that it will not effect torque transfer. Also, the outside diameter G of the cylindrical protrusion 65 at the tip of the central shaft 62 is set smaller than the inner diameter (i.e., the top land diameter) D of the female splines 90.

Therefore, with the wheel bearing assembly according to this sixth example embodiment, the male splines 80 on the central shaft 62 of the CV joint outer ring 60 are placed into mesh, i.e., spline engaged, with the female splines 90 in the central hole 14 of the hub spindle 13 of the wheel hub 10, as shown in FIG 15. Then the cylindrical protrusion 67 at the tip of the central shaft 62 is calked radially outward along the outer end surface of the hub spindle 13 so as to form a calked portion 68. As a result, the hub spindle 13 and the CV joint outer ring 60 are integrally fastened to one another such that torque can be transferred therebetween (see FIG. 14).

The hub spindle 13 and the central shaft 62 of the CV joint outer ring 60 may be aligned on the same central axis by press-fitting the top lands of the large diameter male spline portion 83 of the central shaft 62 and the large diameter hole93 of the central hole 14 at a portion in the spline engaging region W1 where the male splines 80 engage with the female splines 90. Therefore, it is not necessary to precisely grind the male and female splines along their entire lengths in the axial direction in the spline engaging region W1, so machining costs can be reduced.

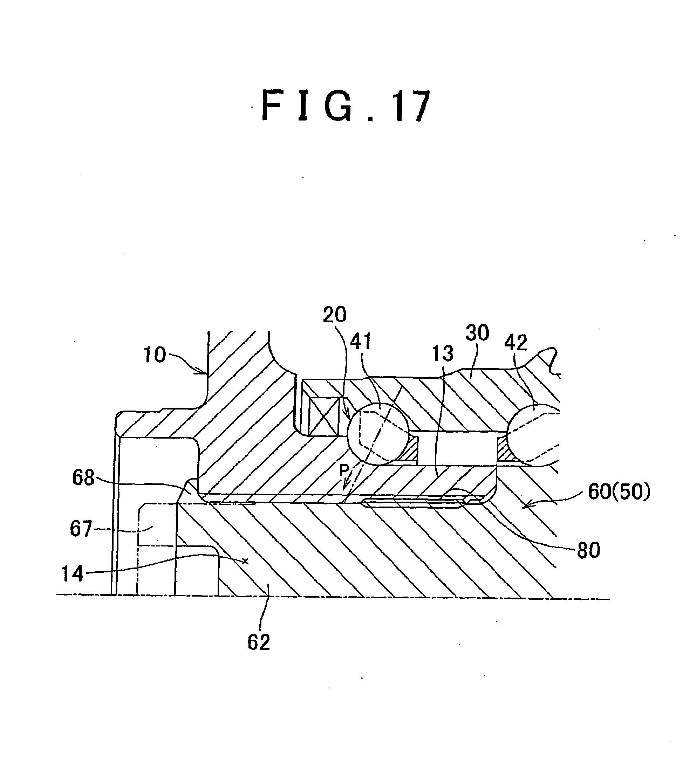

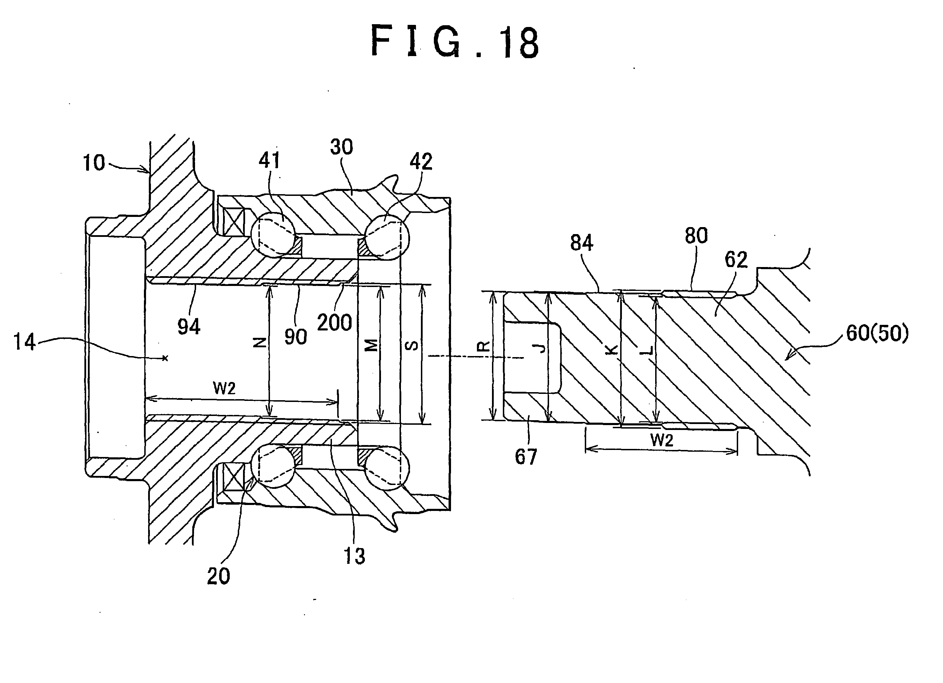

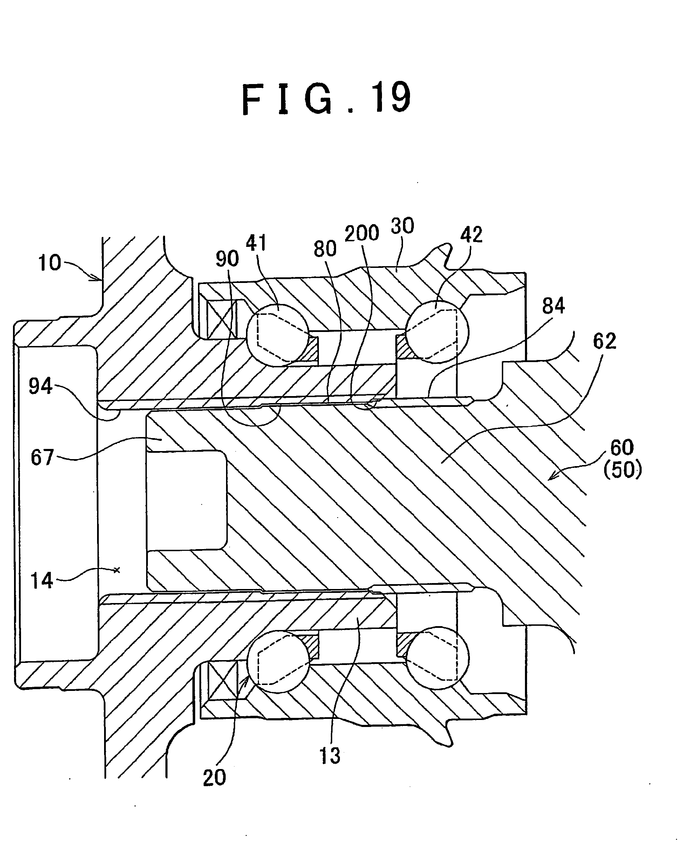

Next, a seventh example embodiment of the invention will be described with reference to FIGS. 17 to 19. FIG 17 is an enlarged longitudinal view of a spline engaging region of male splines on a central shaft of a CV joint outer ring and female splines in a central hole provided in a hub spindle of a wheel hub of a wheel bearing assembly. FIG 18 is a longitudinal sectional view of the seventh example embodiment, which shows the wheel hub removed from the CV joint outer ring, and FIG. 19 is a view showing the initial state when the male and female splines are in mesh. In the following description, portions that are similar to or the same as portions in the first through the sixth example embodiments will be denoted by the same reference numerals used the first and the sixth example embodiments.

As shown in FIGS. 17 to 19, a smooth surface portion provided in a spline engaging region W2 where male splines 80 on the central shaft 62 engage with female splines 90 in a central hole 14 of the hub spindle 13 of a wheel hub 10, is formed on the central shaft 62 in a wheel bearing assembly according to the seventh example embodiment. That is, the smooth surface portion is formed by a smooth shaft portion 84 having no spline teeth, which is formed on part of the central shaft 62 in the axial direction in the spline engaging region W2 (i.e., on a part that is approximately half the length of the spline engaging region W2 at the portion near the tip end of the central shaft 62). The outside diameter J of this smooth shaft portion 84 is set smaller than the outside diameter (i.e., the top land diameter) K of the spline teeth of the male splines 80 and larger than the root diameter L, as well as slightly smaller than the inner diameter (i.e., the top land diameter) M of a general portion of the female splines 90. Meanwhile, a small diameter female spline portion 94, which has an inner diameter that is slightly smaller than the outside diameter of the smooth shaft portion 84, is formed in a part of the central hole 14 in the axial direction in the spline engaging region W2 (i.e., in a part that is approximately half the length of the spline engaging region W2 at the portion near the side of the central hole 14). The small diameter female spline portion 94 has a top land that is press-fitted against the outer peripheral surface of the smooth shaft portion 84, and has an inner diameter N that is smaller than the inner diameter (i.e., the top land diameter) M of a general portion of the female splines 90. Furthermore, the outer peripheral surface of the smooth shaft portion 84 and the top land (i.e., the inner diameter surface) of the small diameter female spline portion 94 are machined with high precision by grinding.

Also, in the seventh example embodiment, the position of the press-fit engaging portion of the smooth shaft portion (smooth surface portion) 84 and the small diameter female spline portion 94 is set such that, when the bearing rotates acts in the direction of arrow P in the drawing, the load on the balls 41 of the angular contact ball bearing 20is received by the press-fit engaging portion. Further, in the seventh example embodiment, the cylindrical protrusion 67 used to form the calked portion 68 at the tip of the smooth shaft portion 84 extends out on the same axis as the smooth shaft 84, and the outside diameter R of the cylindrical protrusion 67 is set smaller than the both the outside diameter J of the smooth shaft portion 84 and the inner diameter N of the small diameter female spline portion 94.

In the seventh example embodiment, an inner diameter S is formed larger than the inner diameter M by shaving away a predetermined amount from the top land, compared to the top land of a general portion of the female splines 90, on a predetermined length of one end of the female splines 90 formed in the central hole 14, such that a meshing guide portion 200 is formed on that portion in order to guide the male splines 80 on the central shaft 62 into mesh with the female splines 90 in the central hole 14 before the smooth shaft portion 84 of the central shaft 62 is press-fitted into the small diameter spline portion 94. That is, the inner diameter of the tip inner end portion of the spline teeth of the female splines 90 in the region where they are in mesh with the spline teeth of the male splines 80, is larger than the outside portion of the female splines 90 that is positioned at the outside from the tip inner end portion of the spline teeth of the female splines 90. Therefore, the smooth shaft portion 84 of the central shaft 62 is press-fitted into the small diameter female spline portion 94 while the male splines 80 on the central shaft 62 of the CV joint outer ring 60 are smoothly placed into mesh with the female splines 90 in the central hole 14 of the hub spindle 13.

Therefore, in the seventh example embodiment, the central hole 14 and the central shaft 62 may be aligned on the same central axis by press fitting the outer peripheral surface of the smooth shaft portion 84 of the central shaft 62 together with the top lands of the small diameter female spline portion 94 of the central hole 14. Therefore, it is not necessary to precisely grind the male and female splines along their entire lengths in the axial direction in the spline engaging region W2, so machining costs can be reduced.

Just as in the first and second example embodiments, a seal layer of anaerobic sealant may also be provided at the meshing area between the male splines 90 and the female splines 80 in the sixth and seventh example embodiments (not shown).

The invention is not limited to the first through the seventh example embodiments described above. For example, in the first and second example embodiments an angular contact ball bearing is used as the roller bearing. Alternatively, however, the invention may also be implemented using a double-row tapered roller bearing instead of an angular contact ball bearing. Also, in the modified examples of the first example embodiment, a double seal is formed using the cover member 110 in addition to the seal layer 101, as shown in FIG 4, or by applying the O-ring 111 or annular packing 112 in addition to the seal layer 101, as shown in FIGS. 5 and 6. However, the invention is not restricted to this. For example, a triple seal may also be formed using a combination of these.

Incidentally, in the third, fourth, and fifth example embodiments, the seal layer made of anaerobic sealant is provided at the meshing area between the male splines 80 and the female splines 90. However, the seal layer may be omitted. Even in this case, by providing the non-meshing area, at the very least, the weight may be reduced so the third, fourth, and fifth example embodiments may also be used independently without providing the seal layer.

Furthermore, in the sixth and seventh example embodiments, the cylindrical protrusion 65 at the tip of the central shaft 62 is calked radially outward to form the calked portion 68 so the hub spindle 13 is integrally coupled to the CV joint outer ring 60. Alternatively, however, the invention may also be implemented by integrally coupling the hub spindle together with the CV joint outer ring by forming external threads at the tip of the central shaft and screwing a locknut onto the external threads.

In the sixth and seventh example embodiments, the seal layer made of the anaerobic sealant is provided on the meshing area between the male splines 80 and the female splines 90. However, the seal layer may also be omitted. Even in this case, at the very least it is not necessary to precisely grind the male and female splines along their entire lengths in the axial direction in the spline engaging region W2, so machining costs may be reduced. Therefore, the sixth and seventh example embodiments may also be used independently without providing the seal layer.

While the invention has been described with reference to example embodiments thereof, it is to be understood that the invention is not limited to the described embodiments or constructions. To the contrary, the invention is intended to cover various modifications and equivalent arrangements. In addition, while the various elements of the example embodiments are shown in various illustrative combinations and configurations, other combinations and configurations, including more, less or only a single element, are also within the scope of the invention.

## Claims

1. A wheel bearing assembly, which includes i) a wheel hub (10) having a hub spindle (13), a central hole (14) formed in the hub spindle (13), and a set of female splines (90) formed on an inner peripheral surface of the central hole (14) that extend in the axial direction, and ii) a constant velocity joint outer ring (60) having a central shaft (62) and a set of male splines (80) formed on an outer peripheral surface of the central shaft (62) that extend in the axial direction, and in which the wheel hub (10) and the constant velocity joint outer ring (60) are splined together by fitting the set of the male splines (80) together with the set of the female splines (90), **characterized by** comprising:
a seal layer (101) made of an anaerobic sealant (101a) that is provided at an area where the set of male splines (80) mesh with the set of female splines (90) to seal a gap present at the meshing area.

2. The wheel bearing assembly according to claim 1, further comprising:
a first annular protrusion (67) formed at a tip of the central shaft (62) of the constant velocity joint outer ring (60); and
an annular elastic seal body (111,112),
wherein the annular elastic seal body (111, 112) is retained between the hub spindle (13) and a calked portion formed by calking the first annular protrusion (67) radially outward with respect to the central shaft (62).

3. The wheel bearing assembly according to claim 1, further comprising:
a second annular protrusion (11a) that stands upright on an outer end surface of the wheel hub (10); and
a watertight cover (110),
wherein the watertight cover (110) is fitted into the second annular protrusion (11a).

4. The wheel bearing assembly according to claim 1, wherein one set of the splines (80, 90) from among the set of male splines (80) and the set of female splines (90), is formed at a lead angle in the circumferential direction; and a non-meshing area (82, 92), where spline teeth are absent, is formed at a middle portion in the axial direction of at least one set of the splines (80, 90) from among the set of male splines (80) and the set of female splines (90).

5. The wheel bearing assembly according to claim 4, wherein a large diameter hole (92), with a bore diameter that is larger than a root diameter of the female spline teeth, is formed at a middle portion in the axial direction of the inner peripheral surface of the central hole (14) provided in the hub spindle (13), and serves as thenon-meshing area (92).

6. The wheel bearing assembly according to claim 4 or 5, wherein a small diameter shaft portion (82), with an outside diameter that is smaller than a root diameter of the male spline teeth, is formed at the middle portion in the axial direction of the central shaft (62) of the constant velocity joint outer ring (60), and serves as the non-meshing area (82).

7. The wheel bearing assembly according to claim 1, wherein:
a smooth surface portion(84, 93) is formed on a part of the one peripheral surface of the inner peripheral surface of the central hole (14) or the outer peripheral surface of the central shaft (62), and is formed at apart of in a spline engaging region (W1, W2) where the set of male splines (80) mesh with the set of female splines (90) in the axial direction;
the smooth surface portion has no spline teeth; and
the smooth surface portion(93, 84) is press fitted against top lands (83, 94) of spline teeth formed on the other peripheral surface surface of the inner peripheral surface of the central hole (14) or the outer peripheral surface of the central shaft (62).

8. The wheel bearing assembly according to claim 7, wherein:
the smooth surface portion (93) is formed on a part of the inner peripheral surface of the central hole (14) by eliminating a part of female spline teeth (90);
a large diameter male spline portion (83), in which a top land diameter is set larger than both a bore diameter of the smooth surface portion (93) and a top land diameter general portion (80) of the male splines that contributes to power transfer, is formed on a part of the male splines (80) of the central shaft (62); and
the large diameter male spline portion (83) is press-fitted against the inner peripheral surface of the smooth surface portion (93).

9. The wheel bearing assembly according to claim 8, wherein the smooth surface (93) is provided at a middle portion in the axial direction of the central hole (14).

10. The wheel bearing assembly according to claim 7, wherein:
the smooth surface portion (84) is formed, by a smooth shaft portion (84) having no male spline teeth (80), on a part of the central shaft (62);
a small diameter female spline portion (94), in which the top land diameter is set smaller than both an outside diameter of the smooth shaft portion (84) and a top land diameter of a general portion (90) of the female splines that contributes to power transfer, is formed on a part of the inner peripheral surface of the central hole (14); and
the small diameter female spline portion (94) is press-fitted in against the outer peripheral surface of the smooth shaft portion (84).

11. The wheel bearing assembly according to claim 10, wherein:
a meshing guide portion (200) is provided at an inner end portion of the spline teeth of the female splines in a region where the spline teeth of the female splines mesh with the spline teeth of the male splines; and
a top land inner diameter (S) of the meshing portion is larger than a top land inner diameter (M) of a portion which is located on the outside of the spline teeth of the female splines (90) in the region where the spline teeth of the female splines (90) mesh with the spline teeth of the male splines (80).

12. A method of manufacturing wheel bearing assembly that includes preparing a wheel hub (10) having a hub spindle (13), a central hole (14) formed in the hub spindle (13), and female splines (90) formed extending in the axial direction on an inner peripheral surface of the central hole (14), and preparing a constant velocity joint outer ring (60) having a protruding central shaft (62) and male splines (80) formed extending in the axial direction on an outer peripheral surface of the central shaft (62), **characterized by** comprising the steps of:
applying an anaerobic sealant (101a) to the spline teeth of at least one set of splines from among the male splines (80) and the female splines (90); and
splining the wheel hub (10) and the constant velocity joint outer ring (60) together by fitting the male splines (80) and the female splines (90) together.

13. The method of manufacturing a wheel bearing assembly according to claim 12, further comprising:
forming a large diameter hole (92) which is larger than a root diameter of female spline teeth at a middle portion in the axial direction of the inner peripheral surface of the central hole (14); and
forming the female spline teeth after forming a large diameter hole (92).

14. The method of manufacturing a wheel bearing assembly according to claim 12, further comprising:
forming a small diameter shaft portion (82) which is smaller than a root diameter of male spline teeth at a middle portion in the axial direction of the outer peripheral surface of the central shaft (62); and
forming the male spline teeth after forming a small diameter shaft portion (82).

15. The method of manufacturing a wheel bearing assembly according to claim 12, further comprising:
forming a smooth surface portion (84, 93), on which the spline teeth are not formed, which is formed at a part of the one peripheral surface of the inner peripheral surface of the central hole (14) and the outer peripheral surface of the central shaft (64); and formed at the part in a spline engaging region (W1, W2) where the male splines (80) mesh with the female splines (90) in the axial direction;
abrasing the smooth surface (84, 93) and top lands (83, 94) of the spline teeth, which are provided on the other peripheral surface of the inner peripheral surface of the central hole (14) and the outer peripheral surface of the central shaft (64); and
press-fitting the smooth surface (84, 93) and the top lands (83, 94) of the spline teeth that contact the smooth surface portion (84, 93).

16. The method of manufacturing a wheel bearing assembly according to claim 15,
wherein:
the smooth surface (93) is formed on a part of the inner peripheral surface of the central hole (14) by eliminating a part of female spline teeth (90);
a large diameter male spline portion (83), in which a top land diameter is set larger than both a bore diameter of the smooth surface (93) and a top land diameter of a general portion (80) of the male splines that contributes to power transfer, is formed on a part of the male splines (80) of the central shaft (62);
the smooth surface potion (93) and the large diameter male spline portion (83) are abrased; and
the large diameter male spline portion (83) is press-fitted against the inner peripheral surface of the smooth surface portion(93).

17. The method of manufacturing a wheel bearing assembly according to claim 15,
wherein:
the smooth surface portion (84) as a smooth shaft portion (84) is formed on a part of the outer peripheral surface of the central shaft (62) by eliminating a part of male spline teeth; a small diameter female spline portion (94), in which a top land diameter is set smaller than both an outside diameter of the smooth shaft portion (84) and a top land diameter of a general portion (90) of the female splines that contributes to power transfer, is formed on a part of the inner peripheral surface of the central hole (14); the smooth shaft portion (84) and the small diameter female spline portion (94) are abased; and the small diameter female spline portion (94) is press-fitted against the outer peripheral surface of the smooth shaft portion (84).
